# FASCICULE DE BREVET EUROPEEN

(11) **EP 2 588 782 B1**
(45) Date de publication et mention de la délivrance du brevet: **04.05.2016**
(21) Numéro de dépôt: 11741476.3
(22) Date de dépôt: 27.06.2011
(51) Int. Cl.: F16K 1/226, F16K 27/02, F02D 9/10, F02M 26/00

(54) **VANNE DE CIRCULATION DE FLUIDE**
FLÜSSIGKEITSVENTIL
FLUID VALVE

(30) Priorité: 30.06.2010 FR 1002777
(43) Date de publication de la demande: 08.05.2013
(73) Titulaire: Valeo Systèmes de Contrôle Moteur, 95800 Cergy (FR)
(72) Inventeur: ADENOT, Sébastien, F-95300 Pontoise (FR); HODEBOURG, Grégory, F-78500 Sartrouville (FR)
(74) Mandataire: Cardon, Nicolas
(86) Numéro de dépôt international: PCT/FR2011/051485
(87) Numéro de publication internationale: WO 2012/001282

(56) Documents cités:
- WO-A2-2009/151681
- DE-A1- 2 427 995
- DE-A1- 19 936 457
- FR-A1- 2 933 469
- US-A1- 2008 303 178

## Description

La présente invention concerne une vanne de circulation de fluide. Il pourra s'agir, notamment, de gaz d'échappement d'un moteur de véhicule automobile, d'air frais destiné à l'admission du moteur ou d'un mélange d'air frais et de gaz d'échappement.

Ladite vanne pourra ainsi servir à régler un débit de gaz d'échappement destiné à être recirculé vers la ligne d'admission en air du moteur. En particulier, elle pourra être utilisée dans des architectures moteur, notamment diesel, à turbo compresseur, ladite vanne étant prévue sur la ligne d'échappement du moteur en aval de la turbine du turbo compresseur pour prélever une partie des gaz. Elle pourra aussi servir de vanne doseuse en étant positionnée le long de la ligne d'admission d'air ou de la ligne de recirculation de gaz d'échappement.

Actuellement, il est connu, notamment dans la demande de brevet FR 2 933 469, une vanne comprenant un volet mobile et un joint d'étanchéité. Ledit joint présente une ouverture pour le passage du fluide, ladite ouverture étant obturée par le volet lorsque celui-ci est dans une position de fermeture.

L'étanchéité de la fermeture est réalisée grâce à des languettes flexibles, issues du joint, contre lesquelles une surface plane du volet vient en appui en position de fermeture. Cependant, pour permettre le débattement du volet, les languettes sont interrompues au niveau de l'axe d'articulation du volet, ce qui nuit à l'étanchéité. De plus la demande US 2008/0303178 décrit une vanne selon le préambule de la revendication 1.

La présente invention a pour but de remédier à ces problèmes et propose pour cela une vanne de circulation de fluide comprenant un volet mobile munie d'une première et d'une deuxième aile, ladite vanne comprenant en outre un joint d'étanchéité, ledit joint présentant une ouverture pour le passage du fluide, l'une au moins desdites ailes, dite aile d'obturation, étant apte à obturer, au moins en partie, ladite ouverture du joint, lorsque le volet est dans une position de fermeture.

Selon l'invention, ladite aile d'obturation et l'autre desdites ailes sont prévues de part et d'autre du joint, lorsque le volet est en position de fermeture et ledit volet comprend une zone intermédiaire, reliant ladite première et ladite seconde aile, traversant ladite ouverture du joint.

On peut ainsi disposer d'une étanchéité le long de la périphérie de l'ouverture du joint, par l'intermédiaire de la ou des ailes qui pourront venir en appui contre des surfaces du joint, sur la périphérie de ladite ouverture, sans nuire au débattement du volet. Quant à l'étanchéité au niveau de la zone intermédiaire, elle pourra être renforcée par la zone intermédiaire elle-même qui, en passant de part et d'autre de ladite ouverture, pourra permettre un contact affleurant avec le joint au niveau de ladite ouverture. Selon l'invention, le joint présente une zone borgne, située en vis-à-vis de la seconde aile lorsque le volet est en position de fermeture, l'ouverture du joint n'étant prévue qu'au niveau de l'aile d'obturation et le corps est réalisé en deux parties, chaque partie définissant un conduit, et présentant une ouverture venant en correspondance pour définir une fenêtre, le joint d'étanchéité jouant aussi un rôle d'étanchéité entre lesdites deux parties vis-à-vis de l'extérieur de la vanne.

Selon différents mode de réalisation :
- ledit joint comprend une zone plane présentant une surface contre laquelle ladite aile d'obturation vient en appui par l'une de ses faces, prévue plane, dit face d'appui de l'aile d'obturation, et/ou une surface opposée contre laquelle l'autre aile du volet vient en appui, par l'une de ses faces, prévue plane, dite face d'appui de l'autre aile, lorsque le volet est en position de fermeture, ladite ouverture pour le passage du fluide prévue dans le joint étant positionnée au niveau de ladite zone plane,
- ladite surface d'appui de l'aile d'obturation et ladite surface d'appui de l'autre aile du volet s'étendent selon deux plans parallèles distants l'un de l'autre,
- lesdits plans sont distants d'une dimension correspondant à l'épaisseur du joint dans ladite zone plane,
- l'autre aile du volet présente une surface opposée à sa surface d'appui, plane, et la zone intermédiaire présente un pan incliné entre la face d'appui de l'aile d'obturation et ladite face opposée,
- la vanne comprend, à proximité de la zone intermédiaire du volet, un axe d'articulation du volet, prévu excentré par rapport audit volet, et selon la direction de l'axe d'articulation du volet, ladite aile d'obturation présente une dimension s'étendant de part et d'autre au-delà de la dimension selon laquelle s'étend la zone intermédiaire, au moins au niveau d'une zone de jonction entre ladite zone intermédiaire et ladite aile d'obturation,
- ledit joint présente un bossage le long d'une partie de l'ouverture de passage, prévue en vis-à-vis de l'autre aile du volet quand celui-ci est en position de fermeture, ledit bossage étant configuré pour être comprimé par ladite autre aile du volet quand celui-ci est en position de fermeture.

Dans un premier mode de réalisation, on pourra utiliser le joint et le volet définis plus haut dans une vanne comprenant un corps définissant un conduit principal et un conduit auxiliaire d'écoulement du fluide, débouchant dans ledit conduit principal, ledit volet étant prévu mobile entre la position de fermeture, prévue empêchant la communication entre les deux conduits, et une position d'ouverture, permettant la mise en communication desdits conduits, au niveau d'une fenêtre de passage du fluide, ladite ouverture du joint permettant le passage du fluide d'un conduit à l'autre.

Ladite première aile permet, par exemple, de fermer ladite fenêtre de passage, lorsque le volet est en position de fermeture, et ladite seconde aile permet de fermer au moins partiellement ledit premier conduit, lorsque le volet est en positon d'ouverture, ladite première aile étant ladite aile d'obturation et ladite seconde aile étant ladite autre aile.

Ledit corps comprend, par exemple, un logement pour un moteur d'actionnement du volet, ledit corps étant configuré pour définir une lame d'air entre ladite zone borgne et ledit logement.

L'invention sera mieux comprise à la lumière de la description suivante qui n'est donnée qu'à titre indicatif et qui n'a pas pour but de la limiter, accompagnée des dessins joints parmi lesquels :
- la figure 1 illustre en perspective un joint d'étanchéité et un volet destiné à être monté dans la vanne selon un premier mode de réalisation de l'invention, le joint d'étanchéité étant représenté en transparence, le volet étant en position de fermeture,
- la figure 2 est une vue de coupe, effectuée selon un plan de coupe orthogonale à l'axe d'articulation du volet, illustrant le joint d'étanchéité et le volet de la figure 1, monté dans leur vanne, le volet étant en position partiellement ouverte,
- la figure 3 illustre en perspective la vanne dans laquelle sont montés le joint d'étanchéité et le volet des figures 1 et 2, ladite vanne étant solidaire d'un échangeur de chaleur,
- la figure 4 illustre en perspective une partie de la vanne de la figure 3,
- la figure 5 illustre en perspective un joint d'étanchéité et un volet destiné à être monté dans une vanne selon un exemple ne faisant pas partie de l'invention, le volet d'étanchéité étant représenté en transparence, le volet étant en position de fermeture,
- la figure 6 reprend la figure 5, le volet étant en position d'ouverture,
- la figure 7 illustre de façon schématique, de côté, la vanne dans laquelle le joint d'étanchéité et le volet des figures 5 et 6 sont montés.

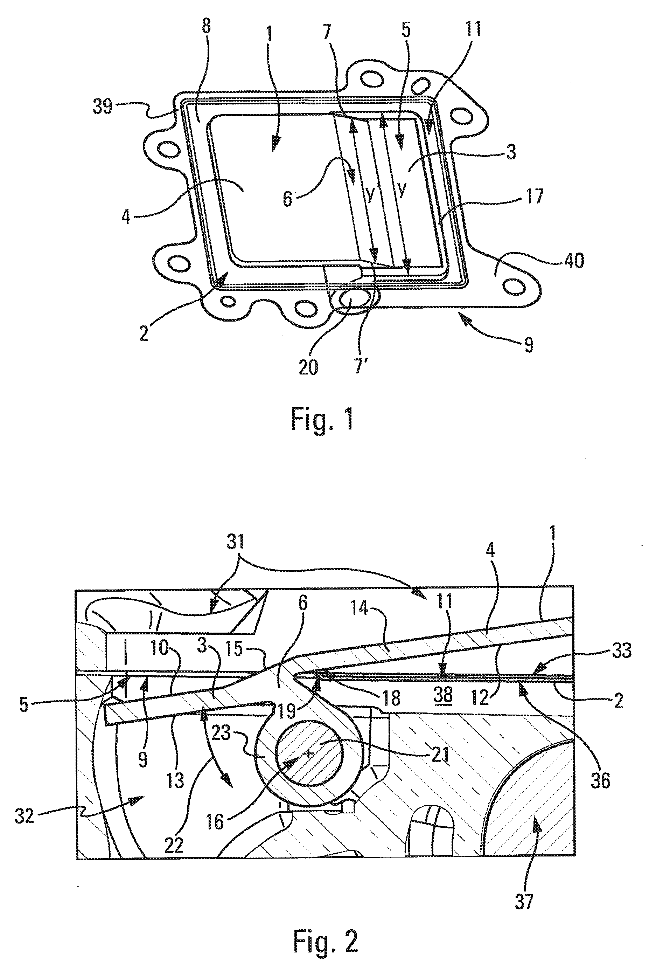

Comme illustré aux figures 1 et 2, l'invention concerne une vanne de circulation de fluide comprenant un volet mobile 1 et un joint d'étanchéité 2. Le volet 1 est muni d'une première aile 3 et d'une deuxième aile 4. Le joint 2 présente une ouverture 5 pour le passage du fluide.

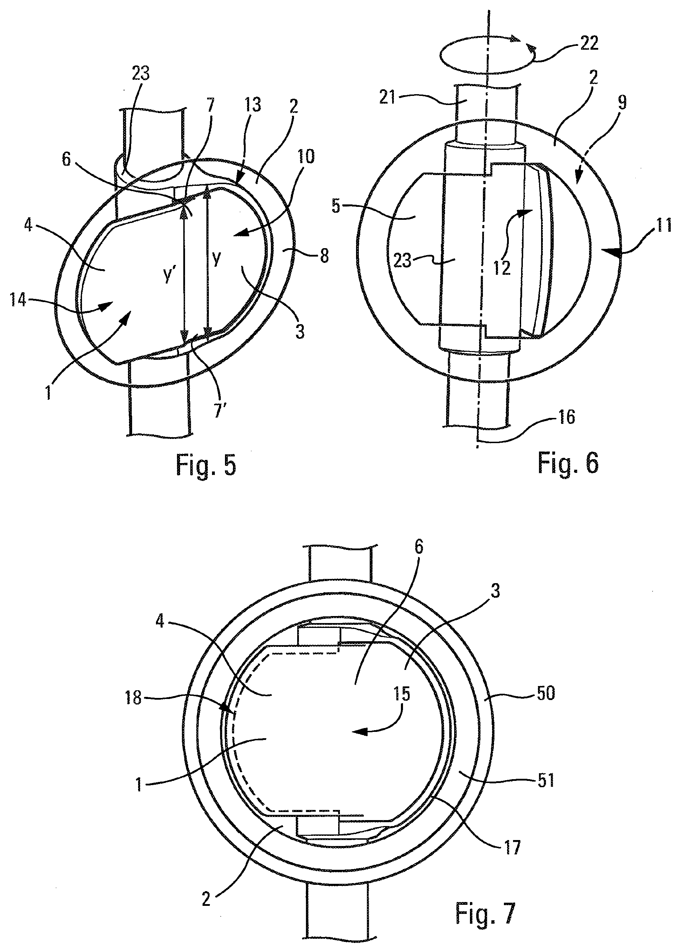

L'une 3 au moins desdites ailes, dite aile d'obturation, est apte à obturer, au moins en partie, ladite ouverture 5 du joint, lorsque le volet est dans une position de fermeture. Dans le mode réalisation des figures 1 et 2, la seule aile d'obturation 3 suffit à fermer ladite ouverture 5 du joint. Dans l'exemple des figures 5 et 6, l'autre aile 4 contribue également à obturer ladite ouverture 5 du joint, lorsque le volet 1 est en position de fermeture.

Dans une position d'ouverture du volet, ladite première 3 et ladite seconde aile 4 s'étendent d'un côté et de l'autre du joint d'étanchéité 2, de façon transversale à celui-ci pour laisser passer le fluide.

Dans le mode de réalisation des figures 1 et 2, le volet 1 est incliné par rapport au joint 2 dans sa position d'ouverture maximale, non représentée.

Dans le mode de réalisation des figures 5 et 6, le volet 1 est orthogonal au joint 2 dans sa positon d'ouverture maximale.

Selon l'invention, ladite aile d'obturation 3 et l'autre 4 desdites ailes sont prévues de part et d'autre du joint 2, lorsque le volet est en position de fermeture, et ledit volet 2 comprend une zone intermédiaire 6, reliant ladite première 3 et ladite seconde 4 aile, traversant ladite ouverture du joint, par exemple de façon affleurante, au niveau de zones 7, 7' du contour de ladite ouverture 5 du joint.

On peut ainsi obtenir une étanchéité autour de l'ouverture 5 du joint tout en autorisant le débattement du volet entre sa position d'ouverture et sa position de fermeture sans avoir à laisser des jeux importants entre l'ouverture du joint et le contour du volet.

Selon les différents modes de réalisation illustrés, ledit joint 2 comprend une zone plane 8 présentant une surface 9 contre laquelle ladite aile d'obturation 3 vient en appui par l'une 10 de ses faces, prévue plane, dit face d'appui de l'aile d'obturation, et/ou une surface opposée 11 contre laquelle l'autre aile 4 du volet vient en appui, par l'une 12 de ses faces, prévue plane, dite face d'appui de l'autre aile, lorsque le volet est en position de fermeture. Ladite ouverture 5 pour le passage du fluide prévue dans le joint 2 est positionnée au niveau de ladite zone plane 8. L'étanchéité est ainsi réalisée par un contact face contre face au niveau de la ou desdites ailes.

Ladite surface d'appui 10 de l'aile d'obturation et ladite surface d'appui 12 de l'autre aile du volet s'étendent, par exemple, selon deux plans parallèles distants l'un de l'autre, par exemple d'une dimension correspondant à l'épaisseur du joint dans ladite zone plane 8. On peut ainsi assurer des contacts du type plan sur plan.

L'aile d'obturation 3 présente une surface 13, opposée à sa surface d'appui 10, et l'autre aile 4 présente une surface 14 opposée à sa surface d'appui 12. Ces deux faces opposées 13, 14 sont, par exemple, planes et la zone intermédiaire 6 présente un pan incliné 15 entre la face d'appui 10 de l'aile d'obturation 3 et ladite face opposée 14 de l'autre aile 4. On favorise de la sorte l'écoulement du fluide à la surface du volet.

Selon les modes de réalisation illustrés, la vanne comprend un axe d'articulation 16 du volet 1, prévu excentré par rapport audit volet 1 et situé, par exemple, à proximité de la zone intermédiaire 6 du volet.

Selon la direction de l'axe d'articulation du volet, ladite aile d'obturation présente une dimension y s'étendant de part et d'autre au-delà de la dimension y' selon laquelle s'étend la zone intermédiaire 6, au moins au niveau d'une zone de jonction entre ladite zone intermédiaire et ladite aile d'obturation 3. La surface d'appui 10 de l'aile d'obturation 3 peut ainsi présenter une zone de contact 17, sous la forme d'une portion angulaire d'anneau, avec le joint 2, sur une première partie de la périphérie de l'ouverture 5 du joint, d'un côté dudit joint, tandis que la surface d'appui 12 de l'autre aile 4 présente, de l'autre côté du joint, une zone de contact 18, sur une partie complémentaire de la périphérie de l'ouverture 5 du joint.

Selon les modes de réalisations illustrés, la zone de contact 17 offerte par l'aile d'obturation 3 s'étend aussi au droit de la zone intermédiaire 6, au niveau des zones 7, 7'. On renforce ainsi l'étanchéité et on pourrait avoir une zone intermédiaire 6 qui n'affleure pas le contour de l'ouverture 5 du joint.

Comme plus particulièrement illustré à la figure 2, ledit joint 2 présente un bossage 19 le long d'une partie de l'ouverture 5 du joint, prévu en vis-à-vis de l'autre aile 4 du volet, quand celui-ci est en position de fermeture. Ledit bossage est configuré pour être comprimé par ladite autre aile 4 du volet quand celui-ci est en position de fermeture. Ceci améliore encore l'étanchéité.

Le volet 1 présente, par exemple, un logement 20 pour un arbre 21 d'articulation. Il s'agit, notamment, d'une articulation en rotation autour de l'axe d'articulation 16, comme cela est illustré dans les dessins par les flèches repérées 22. Ledit logement se trouve, par exemple, dans une extension 23 de la zone intermédiaire 6, s'étendant depuis la face opposée 13 à la face d'appui 10 de l'aile d'obturation et depuis la face d'appui 12 de l'autre aile 4 du volet.

Le logement 20 est ici traversant et l'arbre 21 débouche de part et d'autre du logement 20. L'arbre 21 est relié à l'extension 23 de façon connue en soi.

L'aile d'obturation 3, l'autre aile 4, la zone intermédiaire 6 et son extension 23 forment, par exemple, une pièce unique, notamment issue de fonderie.

Tel que cela est illustré aux figures 1 et 2, sans que cela soit limité au mode de réalisation en cause, l'ouverture 5 du volet présente un contour sensiblement rectangulaire, de même que le volet d'obturation 3. Et la zone de contact 17 de ladite aile d'obturation 3 s'étend le long de trois des côtés de ladite ouverture. Quant à la zone de contact 18, elle s'étend le long du dernier côté. Ladite zone intermédiaire est prévue en vis-à-vis du contour de ladite ouverture 5 sur une partie de deux de ses côtés opposés. La zone de contact 17 de l'aile d'obturation 3 est prolongé au droit de ladite partie intermédiaire 6, au niveau des zone 7, 7'. Ledit autre volet 4 pourra être lui aussi rectangulaire.

Tel que cela est illustré aux figures 5 et 6, sans que cela soit limité à l'exemple en cause, l'ouverture 5 est constituée de deux rectangles, prévus côte à côte, l'un des deux rectangles présentant une dimension, selon l'axe d'articulation du volet, inférieure à l'autre, chacun desdits rectangles étant ici prolongés d'une portion de disque. Ladite autre aile 4 présente une forme rectangulaire, ici prolongée d'une portion de disque, obturant la partie de l'ouverture 5 comprenant la partie rectangulaire la plus petite tandis que l'aile d'obturation 3 présente une forme rectangulaire, ici prolongée d'une portion de disque, obturant la partie de l'ouverture comprenant la partie rectangulaire la plus grande. Ladite autre aile 4 s'étend au-delà de l'ouverture 5 de façon à ce que la zone de contact 18 correspondante suive les bords de l'ouverture 5 du joint se trouvant le long des côtés de la partie rectangulaire la plus petite de l'ouverture 5, orientés perpendiculairement à l'axe de rotation, et le long de la partie en forme de portion de disque qui la prolonge. Ladite aile d'obturation 3 s'étend au-delà de l'ouverture 5 de façon à ce que la zone de contact 17 correspondante suive les bords de l'ouverture 5 se trouvant le long des côtés de la partie rectangulaire la plus grande de l'ouverture 5, orientés perpendiculairement à l'axe de rotation, et le long de la partie en forme de disque qui la prolonge. Ladite zone intermédiaire 6 est prévue en vis-à-vis du contour de ladite ouverture 5 sur une partie de deux des côtés opposés de la partie rectangulaire la plus grande qui la compose. Comme dans l'autre mode de réalisation, la zone de contact 17 de l'aile d'obturation 3 se prolonge au droit de ladite partie intermédiaire 6, au niveau des zones 7, 7'. On améliore ainsi l'étanchéité.

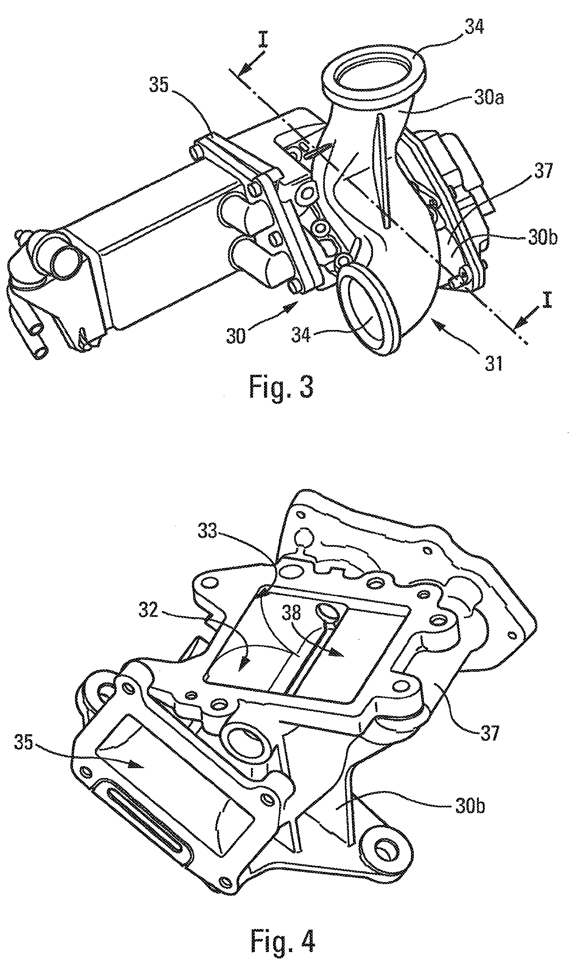

Si l'on revient au mode de réalisation des figures 1 et 2, celui trouvera plus particulièrement son application dans une vanne telle que celle illustrée aux figures 3 et 4.

Celle-ci comprend un corps 30 définissant un conduit principal 31 et un conduit auxiliaire 32 d'écoulement du fluide, débouchant dans ledit conduit principal 31. Ledit volet 1 est prévu mobile entre la position de fermeture, prévue empêchant la communication entre les deux conduits 31, 32, et une position d'ouverture, permettant la mise en communication desdits conduits 31, 32, au niveau d'une fenêtre 33 de passage du fluide, ladite ouverture 5 du joint permettant le passage du fluide d'un conduit 31 à l'autre 32. Ladite ouverture 5 du joint est ainsi prévue en vis-à-vis de la fenêtre 33 du corps 30.

Ladite première aile 3 permet de fermer ladite fenêtre 33 de passage, lorsque le volet est en position de fermeture, et ladite seconde aile 4 permet de fermer au moins partiellement ledit premier conduit 31, lorsque le volet est en positon d'ouverture, ladite première aile étant ladite aile d'obturation.

Le conduit principal présente, par exemple, des orifices 34 d'entrée et de sortie communiquant, dans un exemple d'application, avec la ligne d'échappement d'un moteur. Le conduit auxiliaire présente un orifice 35 communiquant, dans le même exemple d'application, avec une ligne de recirculation de gaz d'échappement.

Ledit corps est réalisé en deux parties 30a, 30b, chaque partie définissant un desdits conduits, et présentant une ouverture venant en correspondance pour définir ladite fenêtre 33. Ledit joint d'étanchéité joue alors aussi un rôle d'étanchéité entre lesdites deux parties 30a, 30b vis-à-vis de l'extérieur de la vanne.

Selon l'invention, ledit joint présente une zone borgne 36, située en vis-à-vis de ladite autre aile 4 lorsque le volet 1 est en position de fermeture. Autrement dit, comme déjà expliqué plus haut, l'ouverture 5 du joint n'est prévue qu'au niveau de l'aile d'obturation 3, le volet 1 étant en position de fermeture.

Ledit corps 30 comprend en outre, par exemple, un logement 37 pour un moteur d'actionnement du volet. Ladite vanne pourra à ce sujet comprendre un système de transmission, non-représenté, entre un arbre de sortie du moteur et l'arbre d'articulation du volet.

Ledit corps 30 pourra aussi être configuré pour définir une lame d'air 38 entre ladite zone borgne 36 du joint et ledit logement 37. On améliore de la sorte l'isolation thermique du moteur.

Le joint 2 présente, par exemple, une partie périphérique 39 et ladite zone plane 8 est située en retrait de la partie périphérique. Un tel joint est obtenu, par exemple, par emboutissage. Ladite partie périphérique 39 pourra présenter des extensions 40 faisant bride d'accrochage sur le corps 30.

Ladite extension 23 du volet accueillant son arbre d'articulation 21 est localisée de façon à fermer ladite lame de fluide 38. Ledit corps 30 présente, par exemple au niveau de la partie 30b définissant le conduit auxiliaire 32, des logements pour l'arbre 21 d'articulation du volet.

Selon l'exemple illustré aux figures 5 à 7, la vanne comprend un corps 50 définissant un conduit d'écoulement de fluide. Ledit volet 1 est prévu mobile entre ladite position de fermeture, prévue empêchant la circulation du fluide dans le conduit, et une position d'ouverture, permettant la circulation du fluide dans le conduit. Ledit joint 2 est prévu positionné de façon transversale audit conduit de façon à ce que ladite ouverture 5 du joint 2 permette le passage du fluide le long du conduit en position d'ouverture du volet.

Comme déjà évoqué, ladite ouverture 5 du joint s'étend en vis-à-vis de l'aile d'obturation 3 et de ladite autre aile 4, lorsque le volet est en position de fermeture.

Le joint d'étanchéité 2 est maintenu dans ledit corps par un manchon 51.

## Revendications

1. Vanne de circulation de fluide comprenant un corps (30), un volet (1), mobile, muni d'une première (3) et d'une seconde aile (4), ladite vanne comprenant en outre un joint d'étanchéité (2), ledit joint (2) présentant une ouverture (5) pour le passage du fluide, la première (3) desdites ailes, dite aile d'obturation, étant apte à obturer, au moins en partie, ladite ouverture (5) du joint (2), lorsque le volet (1) est dans une position de fermeture, ladite aile d'obturation (3) et la seconde aile (4) étant prévue de part et d'autre du joint (2), lorsque le volet est en position de fermeture, ledit volet comprenant une zone intermédiaire (6), reliant ladite première (3) et ladite seconde (4) aile, traversant ladite ouverture (5) du joint, ledit joint (2) présentant une zone borgne (36), située en vis-à-vis de ladite seconde aile (4) lorsque le volet est en position de fermeture, l'ouverture (5) du joint (2) n'étant prévue qu'au niveau de l'aile d'obturation (3) lorsque le volet (1) est en position de fermeture, **caractérisée en ce que**
ledit corps (30) est réalisé en deux parties (30a, 30b), chaque partie définissant un conduit, et présentant une ouverture venant en correspondance pour définir une fenêtre (33), le joint d'étanchéité (2) jouant aussi un rôle d'étanchéité entre lesdites deux parties (30a, 30b) vis-à-vis de l'extérieur de la vanne (2).

2. Vanne selon la revendication 1 dans laquelle ledit joint (2) comprend une zone plane (8) présentant une surface (9) contre laquelle ladite aile d'obturation (3) vient en appui par l'une (10) de ses faces, prévue plane, dit face d'appui de l'aile d'obturation, et une surface opposée (11) contre laquelle la seconde aile (4) du volet vient en appui, par l'une (12) de ses faces, prévue plane, dite face d'appui de la seconde aile (4), lorsque le volet est en position de fermeture, ladite ouverture (5) pour le passage du fluide prévue dans le joint (2) étant positionnée au niveau de ladite zone plane (8).

3. Vanne selon la revendication 2 dans laquelle ladite surface d'appui (10) de l'aile d'obturation (3) et ladite surface d'appui (12) de la seconde aile (4) du volet (1) s'étendent selon deux plans parallèles distants l'un de l'autre.

4. Vanne selon la revendication 3 dans laquelle lesdits plans sont distants d'une dimension correspondant à l'épaisseur du joint (2) dans ladite zone plane (8).

5. Vanne selon l'une quelconque des revendications 2 à 4 dans laquelle la seconde aile (4) du volet présente une surface (14) opposée à sa surface d'appui (12), plane, et la zone intermédiaire (6) présente un pan incliné (15) entre la face d'appui (10) de l'aile d'obturation (3) et ladite face opposée (14).

6. Vanne selon l'une quelconque des revendications précédentes comprenant, à proximité de la zone intermédiaire (6) du volet, un axe d'articulation (16) du volet, prévu excentré par rapport audit volet (1), et dans laquelle, selon la direction de l'axe d'articulation du volet, ladite aile d'obturation (3) présente une dimension s'étendant de part et d'autre au-delà de la dimension selon laquelle s'étend la zone intermédiaire (6), au moins au niveau d'une zone de jonction entre ladite zone intermédiaire et ladite aile d'obturation (3).

7. Vanne selon l'une quelconque des revendications précédentes dans laquelle ledit joint (2) présente un bossage (19) le long d'une partie de l'ouverture (5) de passage, prévue en vis-à-vis de la seconde aile (4) du volet quand celui-ci est en position de fermeture, ledit bossage (19) étant configuré pour être comprimé par ladite seconde aile (4) du volet quand celui-ci est en position de fermeture.

8. Vanne selon l'une quelconque des revendications précédentes dans laquelle le corps (30) définit un conduit principal (31) et un conduit auxiliaire (32) d'écoulement du fluide, débouchant dans ledit conduit principal (31), ledit volet (1) étant prévu mobile entre la position de fermeture, prévue empêchant la communication entre les deux conduits (31, 32), et une position d'ouverture, permettant la mise en communication desdits conduits (31, 32), au niveau d'une fenêtre (33) de passage du fluide, ladite ouverture (5) du joint (2) permettant le passage du fluide d'un conduit à l'autre.

9. Vanne selon la revendication 8 dans laquelle ladite première aile (3) permet de fermer ladite fenêtre de passage (33), lorsque le volet (1) est en position de fermeture, et ladite seconde aile (4) permet de fermer au moins partiellement ledit premier conduit (31), lorsque le volet (1) est en positon d'ouverture, ladite première aile étant ladite aile d'obturation et ladite seconde aile étant ladite autre aile.

## Patentansprüche

1. Fluidzirkulationsventil, das einen Körper (30) und eine bewegliche Klappe (1) enthält, die mit einem ersten (3) und einem zweiten Flügel (4) versehen ist, wobei das Ventil außerdem eine Dichtung (2) enthält, wobei die Dichtung (2) eine Öffnung (5) für den Durchgang des Fluids aufweist, wobei der erste (3) der Flügel, Verschlussflügel genannt, die Öffnung (5) der Dichtung (2) zumindest teilweise verschließen kann, wenn die Klappe (1) in einer Schließstellung ist, wobei der Verschlussflügel (3) und der zweite Flügel (4) zu beiden Seiten der Dichtung (2) vorgesehen sind, wenn die Klappe in der Schließstellung ist, wobei die Klappe eine den ersten (3) und den zweiten (4) Flügel verbindende Zwischenzone (6) enthält, die die Öffnung (5) der Dichtung durchquert, wobei die Dichtung (2) eine einseitig offene Zone (36) aufweist, die sich gegenüber dem zweiten Flügel (4) befindet, wenn die Klappe in der Schließstellung ist, wobei die Öffnung (5) der Dichtung (2) nur im Bereich des Verschlussflügels (3) vorgesehen ist, wenn die Klappe (1) in der Schließstellung ist, **dadurch gekennzeichnet, dass** der Körper (30) in zwei Teilen (30a, 30b) hergestellt ist, wobei jeder Teil einen Kanal definiert, und eine Öffnung aufweist, die in Übereinstimmung kommt, um ein Fenster (33) zu definieren, wobei die Dichtung (2) auch die Aufgabe einer Abdichtung zwischen den zwei Teilen (30a, 30b) gegenüber der Außenseite des Ventils (2) hat.

2. Ventil nach Anspruch 1, wobei die Dichtung (2) eine ebene Zone (8) enthält, die eine Fläche (9), gegen die der Verschlussflügel (3) mit einer (10) seiner eben vorgesehenen Seiten, Auflageseite des Verschlussflügels genannt, in Auflage kommt, und eine gegenüberliegende Fläche (11) aufweist, gegen die der zweite Flügel (4) der Klappe mit einer (12) seiner eben vorgesehenen Seiten, Auflageseite des zweiten Flügels (4) genannt, in Auflage kommt, wenn die Klappe in der Schließstellung ist, wobei die in der Dichtung (2) vorgesehene Öffnung (5) für den Durchgang des Fluids im Bereich der ebenen Zone (8) positioniert ist.

3. Ventil nach Anspruch 2, wobei die Auflagefläche (10) des Verschlussflügels (3) und die Auflagefläche (12) des zweiten Flügels (4) der Klappe (1) sich gemäß zwei voneinander entfernten parallelen Ebenen erstrecken.

4. Ventil nach Anspruch 3, wobei die Ebenen um eine Abmessung entfernt sind, die der Dicke der Dichtung (2) in der ebenen Zone (8) entspricht.

5. Ventil nach einem der Ansprüche 2 bis 4, wobei der zweite Flügel (4) der Klappe eine seiner Auflagefläche (12) gegenüberliegende ebene Fläche (14) aufweist, und die Zwischenzone (6) eine geneigte Bahn (15) zwischen der Auflageseite (10) des Verschlussflügels (3) und der gegenüberliegenden Seite (14) aufweist.

6. Ventil nach einem der vorhergehenden Ansprüche, das in der Nähe der Zwischenzone (6) der Klappe eine Gelenkachse (16) der Klappe enthält, die außermittig bezüglich der Klappe (1) vorgesehen ist, und wobei, in Richtung der Gelenkachse der Klappe, der Verschlussflügel (3) eine Abmessung aufweist, die sich zu beiden Seiten jenseits der Abmessung erstreckt, gemäß der sich die Zwischenzone (6) erstreckt, zumindest im Bereich einer Verbindungszone zwischen der Zwischenzone und dem Verschlussflügel (3).

7. Ventil nach einem der vorhergehenden Ansprüche, wobei die Dichtung (2) eine Wölbung (19) entlang eines Teils der Durchgangsöffnung (5) aufweist, die gegenüber dem zweiten Flügel (4) der Klappe vorgesehen ist, wenn diese in der Schließstellung ist, wobei die Wölbung (19) konfiguriert ist, durch den zweiten Flügel (4) der Klappe komprimiert zu werden, wenn diese in der Schließstellung ist.

8. Ventil nach einem der vorhergehenden Ansprüche, wobei der Körper (30) einen Hauptkanal (31) und einen Nebenkanal (32) für die Strömung des Fluids definiert, der in den Hauptkanal (31) mündet, wobei die Klappe (1) zwischen der Schließstellung, die die Verbindung zwischen den zwei Kanälen (31, 32) verhindernd vorgesehen ist, und einer Öffnungsstellung beweglich vorgesehen ist, die die Verbindung der Kanäle (31, 32) im Bereich eines Durchgangsfensters (33) des Fluids ermöglicht, wobei die Öffnung (5) der Dichtung (2) den Übergang des Fluids von einem Kanal zum anderen erlaubt.

9. Ventil nach Anspruch 8, wobei der erste Flügel (3) es erlaubt, das Durchgangsfenster (33) zu schließen, wenn die Klappe (1) in der Schließstellung ist, und der zweite Flügel (4) es erlaubt, den ersten Kanal (31) zumindest teilweise zu schließen, wenn die Klappe (1) in der Öffnungsstellung ist, wobei der erste Flügel der Verschlussflügel und der zweite Flügel der andere Flügel ist.

## Claims

1. Fluid circulation valve comprising a body (30) and a mobile flap (1) equipped with a first wing (3) and with a second wing (4), said valve also comprising a seal (2), said seal (2) having an opening (5) for the passage of the fluid, the first (3) of said wings, referred to as the shutoff wing, being able, at least in part, to shut off said opening (5) in the seal (2) when the flap (1) is in a closed position, said shutoff wing (3) and the second wing (4) being provided one on either side of the seal (2) when the flap is in the closed position, said flap comprising an intermediate zone (6) connecting said first wing (3) and said second wing (4), that passes through said opening (5) in the seal, said seal (2) having a blind zone (36) situated facing said second wing (4) when the flap is in the closed position, the opening (5) of the seal (2) being provided only in the region of the shutoff wing (3) when the flap (1) is in the closed position, **characterized in that** said body (30) is made in two parts (30a, 30b), each part defining a duct and having an opening that comes into alignment to define an aperture (33), the seal (2) also acting as a seal providing sealing between the two parts (30a, 30b) with respect to the outside of the valve (2).

2. Valve according to Claim 1, in which said seal (2) comprises a planar zone (8) having a surface (9) against which said shutoff wing (3) comes to bear via one (10) of its faces, designed to be planar and referred to as the bearing face of the shutoff wing, and an opposite surface (11) against which the second wing (4) of the flap comes to bear, via one (12) of its faces, designed to be planar and referred to as the bearing face of the second wing (4), when the flap is in the closed position, said opening (5) for the passage of the fluid and provided in the seal (2) being positioned in the region of said planar zone (8).

3. Valve according to Claim 2, in which said bearing surface (10) of the shutoff wing (3) and said bearing surface (12) of the second wing (4) of the flap (1) extend in two parallel planes distant from one another.

4. Valve according to Claim 3, in which said planes are distant by a dimension corresponding to the thickness of the seal (2) in said planar zone (8).

5. Valve according to any one of Claims 2 to 4, in which the second wing (4) of the flap has a surface (14) on the opposite side to its planar bearing surface (12), and the intermediate zone (6) has an inclined plane (15) between the bearing face (10) of the shutoff wing (3) and said opposite face (14).

6. Valve according to any one of the preceding claims and comprising, near the intermediate zone (6) of the flap, an axis (16) about which the flap is articulated, which is off-centered with respect to said flap (1), and in which valve, in the direction of the axis of articulation of the flap, said shutoff wing (3) has a dimension extending on either side beyond the dimension by which the intermediate zone (6) extends, at least in the region of a zone of connection between said intermediate zone and said shutoff wing (3).

7. Valve according to any one of the preceding claims, in which said seal (2) has a boss (19) along a part of the passage opening (5) which part is provided facing the second wing (4) of the flap when this flap is in the closed position, said boss (19) being configured to be compressed by said second wing (4) of the flap when this flap is in the closed position.

8. Valve according to any one of the preceding claims, in which the body (30) defines a main duct (31) and an auxiliary duct (32) for the flow of the fluid, opening into said main duct (31), said flap (1) being designed to be able to move between the closed position, designed to prevent communication between the two ducts (31, 32), and an open position that allows communication between said ducts (31, 32) at a fluid passage aperture (33), said opening (5) in the seal (2) allowing fluid to pass from one duct to the other.

9. Valve according to Claim 8, in which said first wing (3) makes it possible to close said passage aperture (33) when the flap (1) is in the closed position, and said second wing (4) makes it possible to close said first duct (31) at least partially when the flap (1) is in the open position, said first wing being said shutoff wing and said second wing being said other wing.
